(19) Europäisches Patentamt
European Patent Office
Office européen des brevets

(11) **EP 3 171 486 A1**

(12) **EUROPÄISCHE PATENTANMELDUNG**

(43) Veröffentlichungstag:
24.05.2017 Patentblatt 2017/21

(51) Int Cl.:
*H02K 1/26* (2006.01)　　*H02K 11/21* (2016.01)
*H02K 11/225* (2016.01)　　*H02K 17/16* (2006.01)
*H02K 17/30* (2006.01)　　*H02P 6/17* (2016.01)
*H02P 6/18* (2016.01)

(21) Anmeldenummer: 16197250.0

(22) Anmeldetag: 04.11.2016

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(30) Priorität: **19.11.2015 DE 102015222849**

(71) Anmelder: **ROBERT BOSCH GMBH**
**70442 Stuttgart (DE)**

(72) Erfinder:
• **Serban, Ioan**
**71640 Ludwigsburg (DE)**
• **Stirban, Alin**
**71034 Boeblingen (DE)**

(54) **ASYNCHRONMASCHINE, ROTOR FÜR EINE ASYNCHRONMASCHINE UND VERFAHREN ZUM BESTIMMEN EINES PARAMETERS EINER ASYNCHRONMASCHINE**

(57) Die Erfindung betrifft einen Rotor (220) für eine Asynchronmaschine (200). Dabei weist der Rotor (220) in einem Außenumfangsabschnitt (223) eine Mehrzahl von entlang einer Drehrichtung des Rotors (220) beabstandeten Nuten (222) auf. Hierbei weist zumindest eine Nut (222) bezüglich einer Umfangsoberfläche (226) des Rotors (220) einen Öffnungsquerschnitt (231, 237) auf, der sich von einem Öffnungsquerschnitt (231, 237) einer der Nut benachbarten Nut (222) unterscheidet.

**Fig. 2**

EP 3 171 486 A1

**Beschreibung**

Stand der Technik

Die Erfindung geht aus von einer Vorrichtung oder einem Verfahren nach Gattung der unabhängigen Ansprüche. Gegenstand der vorliegenden Erfindung ist auch ein Computerprogramm.

Asynchronmaschinen können beispielsweise in der Industrie, aber auch im Automobilsektor, z. B. für Traktion, in zunehmendem Maße zum Einsatz kommen.

Offenbarung der Erfindung

Vor diesem Hintergrund werden mit dem hier vorgestellten Ansatz ein Verfahren, weiterhin ein Steuergerät, das dieses Verfahren verwendet, sowie schließlich ein entsprechendes Computerprogramm gemäß den Hauptansprüchen vorgestellt. Durch die in den abhängigen Ansprüchen aufgeführten Maßnahmen sind vorteilhafte Weiterbildungen und Verbesserungen der im unabhängigen Anspruch angegebenen Vorrichtung möglich.

Gemäß Ausführungsformen der vorliegenden Erfindung können insbesondere ungleiche Öffnungen bzw. Öffnungsquerschnitte von Nuten in einem Rotor oder Läufer einer Asynchronmaschine als ein Designkriterium eine Sensorlosigkeit der Asynchronmaschine ermöglichten. Durch diese unterschiedlichen Öffnungen kann beispielsweise eine Leistungsfähigkeit eines Antriebs auch ohne Positionssensorik oder Geschwindigkeitssensorik erreicht werden. Insbesondere können aufgrund der mit unterschiedlichen Öffnung Querschnitten ausgeformten Nuten charakteristische Oberschwingungen in einem Leitungsstrom der Asynchronmaschine bewirkt werden.

Vorteilhafterweise können gemäß Ausführungsformen der vorliegenden Erfindung insbesondere Kosten für elektrische Maschinen eingespart und ein Aufbau bzw. eine Hardware vereinfacht werden. So können die durch eine Beseitigung mechanischer Sensoren zur Erfassung von Geschwindigkeit und zusätzlich oder alternativ Position erreichbaren Kosten- und Volumeneinsparungen auch für Traktionsantriebe erreicht werden. Hierbei kann auch eine erforderliche Redundanz beispielsweise durch sensorlose Schätzung von Position und zusätzlich oder alternativ Geschwindigkeit realisiert werden.

Es wird ein Rotor für eine Asynchronmaschine vorgestellt, wobei der Rotor in einem Außenumfangsabschnitt eine Mehrzahl von entlang einer Drehrichtung des Rotors beabstandeten Nuten aufweist, wobei zumindest eine Nut bezüglich einer Umfangsoberfläche des Rotors einen Öffnungsquerschnitt aufweist, der sich von einem Öffnungsquerschnitt einer der Nut benachbarten weiteren Nut unterscheidet.

Die Asynchronmaschine kann beispielsweise als Motor für Elektrofahrzeuge, als Motor für Hybridfahrzeuge, als Industrieantrieb, als Kleinantrieb im Automobilsektor, z. B. ein sogenannter a-size-Motor, oder dergleichen eingesetzt werden. Eine Haupterstreckungsachse der Nuten kann hierbei quer zu der Drehrichtung des Rotors verlaufen. Die Nuten können als Zwischenräume zwischen Polsternen, Armen oder dergleichen in dem Rotor ausgeformt sein. Jede der Nuten kann zumindest teilweise mit einer Wicklung gefüllt sein. Der Öffnungsquerschnitt jeder der Nuten kann einen Durchmesser, eine Breite eine Länge und zusätzlich oder alternativ ein Schnittprofil der Nut an der Umfangsoberfläche des Rotors aufweisen. Der Außenumfangsabschnitt des Rotors kann von einer Drehachse des Rotors beanstandet angeordnet sein.

Gemäß einer Ausführungsform können die Öffnungsquerschnitte der Nuten entlang der Drehrichtung des Rotors eine lineare Änderung oder eine nichtlineare Änderung aufweisen. Die nichtlineare Änderung kann beispielsweise einen sinusförmigen Verlauf aufweisen. Eine solche Ausführungsform bietet den Vorteil, dass eine zuverlässige und genaue Zuordnung zwischen Öffnungsquerschnitt und der entsprechenden Nut ermöglicht wird.

Auch kann zumindest eine Nut zu der Umfangsoberfläche hin verschlossen sein. Hierbei kann die zumindest eine Nut, die zu der Umfangsoberfläche hin geschlossen ist, einen Öffnungsquerschnitt von null aufweisen. Eine solche Ausführungsform bietet den Vorteil, dass eine Unterscheidbarkeit der Nuten weiter erhöht werden kann.

Es wird auch eine Asynchronmaschine vorgestellt, wobei die Asynchronmaschine einen Stator und eine Ausführungsform des vorstehend genannten Rotors aufweist, wobei der Rotor zumindest teilweise innerhalb des Stators anordenbar ist, wobei der Rotor relativ zu dem Stator drehbar ist.

In Verbindung mit der Asynchronmaschine kann somit eine Ausführungsform des vorstehend genannten Rotors vorteilhaft eingesetzt werden, um beispielsweise eine sensorlose Positionsbestimmung und zusätzlich oder alternativ Geschwindigkeitsbestimmung der Asynchronmaschine zu ermöglichen.

Es wird ferner ein Verfahren zum Bestimmen eines Parameters einer Asynchronmaschine vorgestellt, wobei das Verfahren in Verbindung mit einer Ausführungsform der vorstehend genannten Asynchronmaschine ausführbar ist, wobei das Verfahren einen Schritt des Auswertens von durch die Mehrzahl von Nuten des Rotors bewirkten, detektierten Rotornut-Oberschwingungen in einem Leitungsstrom der Asynchronmaschine aufweist.

Dieses Verfahren kann beispielsweise in Software oder Hardware oder in einer Mischform aus Software und Hardware beispielsweise in einem Steuergerät implementiert sein. Der durch Ausführen des Verfahrens bestimmbare Parameter der Asynchronmaschine kann eine Position des Rotors relativ zu dem Stator und zusätzlich oder alternativ eine Drehzahl der Asynchronmaschine repräsentieren.

Gemäß einer Ausführungsform kann im Schritt des Auswertens eine Drehzahl der Asynchronmaschine unter Verwendung einer Anzahl von Nuten des Rotors, einer Versorgungsfrequenz der Asynchronmaschine und einer Frequenz der Rotornut-Oberschwingungen ermittelt werden. Dabei kann die Frequenz der Rotornut-Oberschwingungen detektiert werden, wobei die Anzahl von Nuten des Rotors sowie die Versorgungsfrequenz gegebene Größen sein können. Eine solche Ausführungsform bietet den Vorteil, dass Beispielsweise die Drehzahl der Asynchronmaschine auf einfache und zuverlässige Weise insbesondere ohne den Einsatz mechanischer Sensorik erfasst werden kann.

Auch können im Schritt des Auswertens die Rotornut-Oberschwingungen unter Verwendung eines Oberschwingungsmodells der Asynchronmaschine und zusätzlich oder alternativ unter Verwendung einer schnellen Fourier-Transformation detektiert werden. Eine solche Ausführungsform bietet den Vorteil, dass die Rotornut-Oberschwingungen mit hohem Störabstand detektiert werden können.

Der hier vorgestellte Ansatz schafft ferner ein Steuergerät, das ausgebildet ist, um die Schritte einer Variante eines hier vorgestellten Verfahrens in entsprechenden Einrichtungen bzw. einer entsprechenden Einrichtung durchzuführen, anzusteuern bzw. umzusetzen. Auch durch diese Ausführungsvariante der Erfindung in Form eines Steuergeräts kann die der Erfindung zugrunde liegende Aufgabe schnell und effizient gelöst werden.

Hierzu kann das Steuergerät zumindest eine Recheneinheit zum Verarbeiten von Signalen oder Daten, zumindest eine Speichereinheit zum Speichern von Signalen oder Daten, zumindest eine Schnittstelle zu einem Sensor oder einem Aktor zum Einlesen von Sensorsignalen von dem Sensor oder zum Ausgeben von Steuersignalen an den Aktor und/oder zumindest eine Kommunikationsschnittstelle zum Einlesen oder Ausgeben von Daten aufweisen, die in ein Kommunikationsprotokoll eingebettet sind. Die Recheneinheit kann beispielsweise ein Signalprozessor, ein Mikrocontroller oder dergleichen sein, wobei die Speichereinheit ein Flash-Speicher, ein EPROM oder eine magnetische Speichereinheit sein kann. Die Kommunikationsschnittstelle kann ausgebildet sein, um Daten drahtlos und/oder leitungsgebunden einzulesen oder auszugeben, wobei eine Kommunikationsschnittstelle, die leitungsgebundene Daten einlesen oder ausgeben kann, diese Daten beispielsweise elektrisch oder optisch aus einer entsprechenden Datenübertragungsleitung einlesen oder in eine entsprechende Datenübertragungsleitung ausgeben kann.

Unter einem Steuergerät kann vorliegend ein elektrisches Gerät verstanden werden, das Sensorsignale verarbeitet und in Abhängigkeit davon Steuer- und/oder Datensignale ausgibt. Das Steuergerät kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen des Steuergeräts beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

In einer vorteilhaften Ausgestaltung erfolgt durch das Steuergerät eine Steuerung eines Betriebs der Asynchronmaschine. Hierzu kann das Steuergerät beispielsweise auf Sensorsignale wie Stromsignale und Auswertungssignale zugreifen. Die Ansteuerung erfolgt unter Verwendung von aus Rotornut-Oberschwingungen bestimmten Positionsdaten des Rotors relativ zum Stator und zusätzlich oder alternativ Geschwindigkeitsdaten der Asynchronmaschine.

Von Vorteil ist auch ein Computerprogrammprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann und zur Durchführung, Umsetzung und/oder Ansteuerung der Schritte des Verfahrens nach einer der vorstehend beschriebenen Ausführungsformen verwendet wird, insbesondere wenn das Programmprodukt oder Programm auf einem Computer oder einer Vorrichtung ausgeführt wird.

Ausführungsbeispiele der Erfindung sind in den Zeichnungen dargestellt und in der nachfolgenden Beschreibung näher erläutert. Es zeigt:

Fig. 1 eine schematische Schnittdarstellung eines Ausschnittes einer Asynchronmaschine;

Fig. 2 eine schematische Schnittdarstellung eines Teilabschnittes einer Asynchronmaschine gemäß einem Ausführungsbeispiel;

Fig. 3 eine schematische Darstellung einer Asynchronmaschine sowie eines Steuergerätes gemäß einem Ausführungsbeispiel; und

Fig. 4 ein Ablaufdiagramm eines Verfahrens zum Bestimmen gemäß einem Ausführungsbeispiel.

In der nachfolgenden Beschreibung günstiger Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

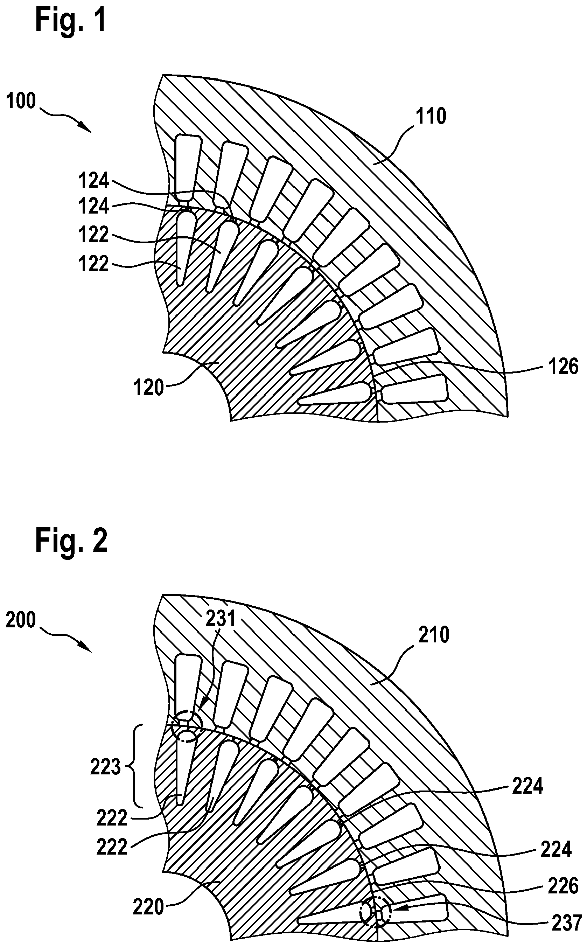

Fig. 1 zeigt eine schematische Schnittdarstellung eines Ausschnittes einer Asynchronmaschine 100. Die Asynchronmaschine 100 weist einen Stator 110 und einen relativ zu dem Stator 110 drehbaren Rotor 120 bzw. Läufer 120 auf. In dem Rotor 120 sind eine Mehrzahl von Nuten 122 ausgeformt. In dem in Fig. 1 dargestellten Ausschnitt der Asynchronmaschine 100 sind lediglich beispielhaft sieben Nuten 122 gezeigt. Jede der Nuten 122 weist eine Öffnung 124 zu einer Umfangsoberfläche 126 des Rotors 120 auf. Die Öffnungen 124 sind hierbei gleich groß bzw. weisen einen gleichen Öffnungsquerschnitt auf.

Anders ausgedrückt zeigt Fig. 1 einen klassischen Designansatz für Asynchronmaschinen, bei dem gleiche Öffnungen 124 bzw. Läufernutöffnungen 124 vorgesehen sind. Somit zeigt Fig. 1 einen Querschnitt einer Asynchronmaschine in einem klassischen Design mit gleichen Läufernutöffnungen 124.

Fig. 2 zeigt eine schematische Schnittdarstellung eines Teilabschnittes einer Asynchronmaschine 200 gemäß einem Ausführungsbeispiel. Dabei ist die Asynchronmaschine 200 beispielsweise als eine Drehstrom-Asynchronmaschine 200 ausgeführt. Die Asynchronmaschine 200 ist insbesondere für einen Einsatz als Motor für Elektrofahrzeuge, als Motor für Hybridfahrzeuge, als Industrieantrieb, als Kleinantrieb im Automobilsektor oder dergleichen vorgesehen.

Die Asynchronmaschine 200 weist einen Stator 210 und einen Rotor 220 auf. Der Rotor 220 ist in der Darstellung von Fig. 2 radial innerhalb des Stators 210 angeordnet. Dabei ist der Rotor 220 relativ zu dem Stator 210 drehbar gelagert. Zwischen dem Rotor 220 und dem Stator 210 ist ein Luftspalt angeordnet.

In dem Rotor 220 sind eine Mehrzahl von Nuten 222 ausgeformt. In dem in Fig. 2 dargestellten Ausschnitt der Asynchronmaschine 200 sind lediglich beispielhaft sieben Nuten 222 gezeigt.

Dabei erstrecken sich die Nuten 222 in einem Außenumfangsabschnitt 223 des Rotors 220. Die Nuten 222 sind entlang einer Drehrichtung des Rotors 220 voneinander beanstandet. Insbesondere repräsentieren die Nuten 222 dabei Zwischenräume zwischen Armen oder Polsternen des Rotors 220.

An den radial auswärts gelegenen Enden der Nuten 222 sind die Nuten 222 angrenzend oder benachbart zu einer Umfangsoberfläche 226 des Rotors 220 angeordnet. Jede der Nuten 222 weist bezüglich der Umfangsoberfläche 226 einen Öffnungsquerschnitt auf, der sich von Öffnungsquerschnitten benachbarter Nuten 222 unterscheidet.

Gemäß dem in Fig. 2 dargestellten Ausführungsbeispiel verändert sich hierbei der Öffnungsquerschnitt der Nuten 222 graduell zwischen einem ersten Öffnungsquerschnitt 231, der einen Öffnungsquerschnitt von null repräsentiert, und einem zweiten Öffnungsquerschnitt 237, der einen maximalen Öffnungsquerschnitt repräsentiert. Insbesondere weisen die Öffnungsquerschnitte der Nuten 222 entlang der Drehrichtung des Rotors 220 dabei eine lineare Änderung oder eine nichtlineare Änderung auf, beispielsweise eine sinusförmige Änderung.

Somit ist hierbei die Nut 222 mit dem ersten Öffnungsquerschnitt 231 bezüglich der Umfangsoberfläche 226 des Rotors 220 geschlossen, wobei die Nuten 222 mit von dem ersten Öffnungsquerschnitt 231 verschiedenen Öffnungsquerschnitten jeweils eine Öffnung 224 zu der Umfangsoberfläche 226 des Rotors 220 aufweisen.

Gemäß einem Ausführungsbeispiel kann der erste Öffnungsquerschnitt 231 einen von null verschiedenen Öffnungsquerschnitt repräsentieren. Dabei können alle Nuten 222 eine Öffnung 224 zu der Umfangsoberfläche 226 aufweisen.

Anders ausgedrückt zeigt Fig. 2 ein Asynchronmaschinenmodell mit variabler Läufernutöffnung 224 über einer Polteilung. Ein Ausformen bzw. Herstellen der Nuten 222 bzw. Läufernuten 222 mit unterschiedlichen Öffnungsquerschnitten und/oder ungleichen Öffnungen 224 führt zu einem Vorliegen von Rotornut-Oberschwingungen in Statorströmen. Die Rotornut-Oberschwingungen können verwendet werden, um eine Position und/oder Geschwindigkeit des Läufers 220 bzw. Rotors 220 nach einer geeigneten Signalverarbeitung des gemessenen Statorstroms bzw. Leitungsstroms oder der gemessenen Statorspannung zu bestimmen.

Der Öffnungsquerschnitt schwankt beispielsweise zwischen 0, d. h. einer geschlossenen Läufernut 222, und einem Maximalwert, anders ausgedrückt zwischen dem ersten Öffnungsquerschnitt 231 und dem zweiten Öffnungsquerschnitt 237. Eine Größe und/oder ein Design der Nuten 222 wird in einer Drehrichtung bzw. Umfangsrichtung des Läufers 220 gleich gehalten, während die Nutöffnung 224 entlang einer Läuferpolperipherie beispielsweise linear zwischen 0 oder einem Minimalwert und einem Maximalwert schwankt. Die Luftspalt-Permeanz umfasst den Einfluss der variablen Öffnungsquerschnitte und/oder Läufernutöffnungen 224 und somit eine präzise Läuferpositionsinformation. Die läuferpositionsabhängige Luftspalt-Permeanz spiegelt sich in einer Wellenform bzw. Signalform des Statorstroms oder der Statorspannung wieder, sodass eine geeignete Signalverarbeitung des gemessenen Stromes oder der gemessenen Spannung zum Bestimmen der Position und/oder Geschwindigkeit des Rotors 220 genutzt werden kann. Dies ermöglicht eine sensorlose Steuerstrategie.

Eine weitere Möglichkeit besteht in einer progressiven, sinusförmigen Verteilung von Öffnungsquerschnitten, wobei eine Läufernutöffnung 224 als eine Sinusverteilung entlang einer Läuferpolperipherie definiert ist.

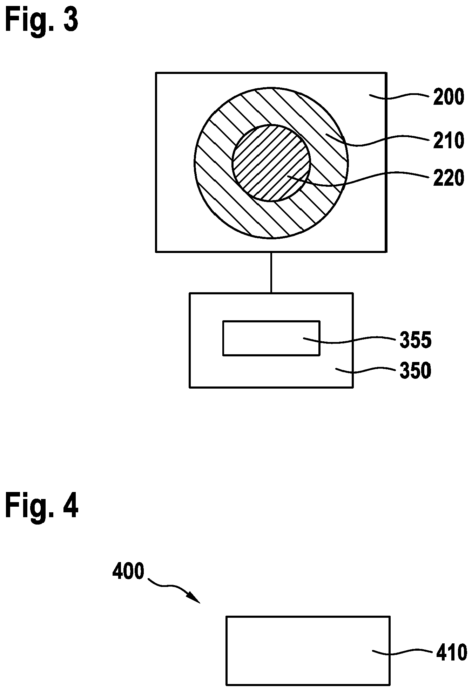

Fig. 3 zeigt eine schematische Darstellung einer Asynchronmaschine 200 sowie eines Steuergerätes 350 gemäß einem Ausführungsbeispiel. Bei der Asynchronmaschine 200 handelt es sich beispielsweise um Asynchronmaschine aus Fig. 2 oder eine ähnliche Asynchronmaschine.

Die Asynchronmaschine 200 weist einen Stator 210 und einen Rotor 220 auf. Der Rotor 220 weist Nuten mit unterschiedlichen Öffnungsquerschnitten auf. Somit handelt es sich bei dem Rotor 220 um den Rotor aus Fig. 2 oder einen ähnlichen Rotor.

Die Asynchronmaschine 200 ist signalübertragungsfähig mit dem Steuergerät 350 verbunden. Das Steuergerät 350 ist ausgebildet, um einen Parameter der Asynchronmaschine 200 zu bestimmen. Dabei weist das Steuergerät 350 eine Einrichtung 355 oder Einheit 355 zum Auswerten bzw. eine Auswerteeinrichtung 355 auf.

Die Auswerteeinrichtung 355 ist ausgebildet, um durch die Mehrzahl von Nuten des Rotors 220 bewirkten, detektierten Läufernut-Oberschwingungen bzw. Rotornut-Oberschwingungen in einem Leitungsstrom oder Statorstrom der Asynchronmaschine 200 auszuwerten. Auf diese Weise kann das Steuergerät 350 unter Verwendung der ausgewerteten Rotornut-Oberschwingungen eine Position des Rotors 220 relativ zu dem Stator 210 und/oder eine Drehzahl der Asynchronmaschine 200 als den Parameter zu bestimmen.

Fig. 4 zeigt ein Ablaufdiagramm eines Verfahrens 400 zum Bestimmen gemäß einem Ausführungsbeispiel. Das Verfahren 400 ist ausführbar, um einen Parameter einer Asynchronmaschine zu bestimmen. Hierbei ist das Verfahren 400 zum Bestimmen in Verbindung mit der Asynchronmaschine aus einer der Figuren 2 bis 3 oder einer ähnlichen Asynchronmaschine ausführbar.

Das Verfahren 400 zum Bestimmen weist einen Schritt 410 des Auswertens von in einem Leitungsstrom oder Statorstrom der Asynchronmaschine detektierten Rotornut-Oberschwingungen auf, welche durch die Mehrzahl von Nuten des Rotors bewirkt sind bzw. werden.

Gemäß einem Ausführungsbeispiel wird im Schritt 410 des Auswertens eine Drehzahl der Asynchronmaschine unter Verwendung einer Anzahl von Nuten des Rotors, einer Versorgungsfrequenz der Asynchronmaschine und einer Frequenz der Rotornut-Oberschwingungen ermittelt. Zusätzlich oder alternativ werden im Schritt 410 des Auswertens dabei die Rotornut-Oberschwingungen unter Verwendung eines Oberschwingungsmodells der Asynchronmaschine und/oder einer schnellen Fourier-Transformation detektiert.

Somit kann das Verfahren 400 insbesondere als ein Geschwindigkeitsbestimmungsverfahren unter Verwendung von im Leitungsstrom erfassten Rotornut-Oberschwingungen realisiert werden. Das Verfahren 400 beruht auf einer sensorlosen Steuerung der Asynchronmaschine insbesondere im Hochgeschwindigkeitsbereich unter Verwendung der Rotornut-Oberschwingungen, welche durch eine Struktur der Asynchronmaschine bewirkt werden. Hierbei erfolgt die Bestimmung der Geschwindigkeit unter Verwendung der Rotornut-Oberschwingungen, welche durch die ungleichen Nutöffnungen und/oder Öffnungsquerschnitte erzeugt und aus dem Leitungsstrom erfasst werden. Es ist möglich, die Rotornut-Oberschwingungen mit einem hohen Störabstand unter Verwendung eines Oberschwingungsmodells der Asynchronmaschine und einer schnellen Fourier-Transformation mit Begrenzung eines Erfassungsbandes zu detektieren.

Eine mit fSH bezeichnete Frequenz der Rotornut-Oberschwingungen, die in dem Leitungsstrom auftreten, beträgt:

$$fSH = Nr * fr \pm f,$$

wobei Nr die Anzahl von Läufernuten pro Polpaar bezeichnet, fr die Drehzahl bzw. Drehfrequenz bezeichnet und f die Versorgungsfrequenz bezeichnet. Da Nr und f bekannt sind, kann somit die Drehzahl fr direkt aus der Frequenz der Rotornut-Oberschwingungen fSH bestimmt werden.

Allerdings enthalten die Leitungsströme nicht nur die Komponente der Rotornut-Oberschwingungen, sondern auch verschiedene Oberschwingungen aufgrund der Kommutierung. Daher kann die schnelle Fourier-Transformation verwendet werden, um die Läufergeschwindigkeit unter Berücksichtigung dessen zu bestimmen, dass die Rotornut-Oberschwingungen eine periodische Funktion darstellen. Im Fall einer Asynchronmaschine mit gleichen Nutöffnungen könnte die Amplitude einiger Oberschwingungskomponenten aufgrund der Kommutierung so hoch wie die Komponente von Rotornut-Oberschwingungen sein. Dies kann durch die vorliegende Asynchronmaschine mit ungleichen Nutöffnungen vermieden werden, wobei eine Amplitude der Rotornut-Oberschwingungen höher und somit detektierbar ist.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

**Patentansprüche**

1. Rotor (220) für eine Asynchronmaschine (200), **dadurch gekennzeichnet, dass** der Rotor (220) in einem Außenumfangsabschnitt (223) eine Mehrzahl von entlang einer Drehrichtung des Rotors (220) beabstandeten Nuten (222) aufweist, wobei zumindest eine Nut (222) bezüglich einer Umfangsoberfläche (226) des Rotors (220) einen Öffnungsquerschnitt (231, 237) aufweist, der sich von einem Öffnungsquerschnitt (231, 237) einer der Nut benachbarten Nut (222) unterscheidet.

2. Rotor (220) gemäß Anspruch 1, **dadurch gekennzeichnet, dass** die Öffnungsquerschnitte (231, 237) der Nuten (222) entlang der Drehrichtung des Rotors (220) eine lineare Änderung oder eine nichtlineare Änderung aufweisen.

3. Rotor (220) gemäß einem der vorangegangenen Ansprüche, **dadurch gekennzeichnet, dass** zumindest eine Nut (222) zu der Umfangsoberfläche (226) hin geschlossen ist.

4. Asynchronmaschine (200), **dadurch gekennzeichnet, dass** die Asynchronmaschine (200) einen Stator (210) und den Rotor (220) gemäß einem der vorangegangenen Ansprüche aufweist, wobei der Rotor (220) zumindest teilweise innerhalb des Stators (210) anordenbar ist, wobei der Rotor (220) relativ zu dem Stator (210) drehbar ist.

5. Verfahren (400) zum Bestimmen eines Parameters einer Asynchronmaschine (200), wobei das Verfahren (400) in Verbindung mit der Asynchronmaschine (200) gemäß einem der vorangegangenen Ansprüche ausführbar ist, **dadurch gekennzeichnet, dass** das Verfahren (400) einen Schritt (410) des Auswertens von durch die Mehrzahl von Nuten (222) des Rotors (220) bewirkten, detektierten Rotornut-Oberschwingungen in einem Leitungsstrom der Asynchronmaschine (200) aufweist.

6. Verfahren (400) gemäß Anspruch 5, **dadurch gekennzeichnet, dass** im Schritt (410) des Auswertens eine Drehzahl der Asynchronmaschine (200) unter Verwendung einer Anzahl von Nuten (222) des Rotors (220), einer Versorgungsfrequenz der Asynchronmaschine (200) und einer Frequenz der Rotornut-Oberschwingungen ermittelt wird.

7. Verfahren (400) gemäß einem der Ansprüche 5 bis 6, **dadurch gekennzeichnet, dass** im Schritt (410) des Auswertens die Rotornut-Oberschwingungen unter Verwendung eines Oberschwingungsmodells der Asynchronmaschine (200) und/oder einer schnellen Fourier-Transformation detektiert werden.

8. Steuergerät (350), das eingerichtet ist, um Schritte des Verfahrens (400) gemäß einem der vorangegangenen Ansprüche in zumindest einer entsprechenden Einheit (355) auszuführen.

9. Computerprogramm, das dazu eingerichtet ist, das Verfahren (400) gemäß einem der vorangegangenen Ansprüche auszuführen.

10. Maschinenlesbares Speichermedium, auf dem das Computerprogramm nach Anspruch 9 gespeichert ist.

## Fig. 1

100

110

124

124

122

122

120

126

## Fig. 2

200

231

210

223

222

222

224

224

226

220

237

## Fig. 3

## Fig. 4

Europäisches Patentamt
European Patent Office
Office européen des brevets

# EUROPÄISCHER RECHERCHENBERICHT

Nummer der Anmeldung

EP 16 19 7250

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | JOACHIM HOLTZ: "Sensorless Position Control of Induction Motors-An Emerging Technology", IEEE TRANSACTIONS ON INDUSTRIAL ELECTRONICS, IEEE SERVICE CENTER, PISCATAWAY, NJ, USA, Bd. 45, Nr. 6, 1. Dezember 1998 (1998-12-01), Seiten 840-852, XP011023445, ISSN: 0278-0046, DOI: 10.1109/41.735327 * Zusammenfassung * * Seite 840, linke Spalte - rechte Spalte * * Abschnitt D; 2. Absatz; Seite 843, rechte Spalte; Abbildung 1 * * Kapitel III; Seite 841, rechte Spalte - Seite 842, linke Spalte * ----- | 1,2,4-10 | INV. H02K1/26 H02K11/21 H02K11/225 H02K17/16 H02K17/30 H02P6/17 H02P6/18 |
| X | US 5 565 752 A (JANSEN PATRICK L [US] ET AL) 15. Oktober 1996 (1996-10-15) * Zusammenfassung * * Spalte 2, Zeile 32 - Zeile 41 * * Spalte 7, Zeile 40 - Spalte 8, Zeile 17; Abbildung 5 * * Spalte 12, Zeile 44 - Spalte 13, Zeile 15; Abbildung 11 * * Spalte 14, Zeile 10 - Zeile 17 * * Spalte 17, Zeile 5 - Spalte 18, Zeile 35; Abbildung 17 * ----- | 1-10 | |
| X | US 6 058 596 A (JANSEN PATRICK LEE [US] ET AL) 9. Mai 2000 (2000-05-09) * Spalte 1, Zeile 5 - Zeile 35 * * Spalte 3, Zeile 33 - Zeile 36 * * Spalte 5, Zeile 17 - Zeile 36; Abbildung 6 * ----- -/-- | 1,2,4 | |

**RECHERCHIERTE SACHGEBIETE (IPC)**

H02K
H02P

Der vorliegende Recherchenbericht wurde für alle Patentansprüche erstellt

| Recherchenort | Abschlußdatum der Recherche | Prüfer |
|---|---|---|
| Den Haag | 24. März 2017 | Moyaerts, Laurent |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

........................................................
& : Mitglied der gleichen Patentfamilie, übereinstimmendes Dokument

EPO FORM 1503 03.82 (P04C03)

Europäisches
Patentamt

European
Patent Office

Office européen
des brevets

# EUROPÄISCHER RECHERCHENBERICHT

Nummer der Anmeldung

EP 16 19 7250

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 6 603 226 B1 (LIANG FENG [US] ET AL) 5. August 2003 (2003-08-05) * Spalte 1, Zeile 5 - Spalte 2, Zeile 11 * * Spalte 4, Zeile 44 - Zeile 65; Abbildungen 7, 8 * ----- | 1,2,4 | |
| X | DE 10 2006 008048 A1 (DENSO CORP [JP]) 21. September 2006 (2006-09-21) * Absatz [0001] * * Absatz [0028] * * Absatz [0033] * ----- | 5-10 | |

**RECHERCHIERTE SACHGEBIETE (IPC)**

Der vorliegende Recherchenbericht wurde für alle Patentansprüche erstellt

| Recherchenort | Abschlußdatum der Recherche | Prüfer |
|---|---|---|
| Den Haag | 24. März 2017 | Moyaerts, Laurent |

EPO FORM 1503 03.82 (P04C03)

Seite 2 von 2

**ANHANG ZUM EUROPÄISCHEN RECHERCHENBERICHT
ÜBER DIE EUROPÄISCHE PATENTANMELDUNG NR.**

EP 16 19 7250

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

24-03-2017

| Im Recherchenbericht angeführtes Patentdokument | Datum der Veröffentlichung | Mitglied(er) der Patentfamilie | Datum der Veröffentlichung |
|---|---|---|---|
| US 5565752 A | 15-10-1996 | US 5565752 A<br>US 5585709 A | 15-10-1996<br>17-12-1996 |
| US 6058596 A | 09-05-2000 | US 6058596 A<br>US 6232692 B1<br>US 6515395 B1<br>US 2003102762 A1 | 09-05-2000<br>15-05-2001<br>04-02-2003<br>05-06-2003 |
| US 6603226 B1 | 05-08-2003 | DE 10150355 A1<br>GB 2367953 A<br>US 6603226 B1 | 02-05-2002<br>17-04-2002<br>05-08-2003 |
| DE 102006008048 A1 | 21-09-2006 | DE 102006008048 A1<br>JP 4650022 B2<br>JP 2006238533 A | 21-09-2006<br>16-03-2011<br>07-09-2006 |

EPO FORM P0461

Für nähere Einzelheiten zu diesem Anhang : siehe Amtsblatt des Europäischen Patentamts, Nr.12/82